# EUROPEAN PATENT APPLICATION

(11) **EP 1 106 878 A2**
(43) Date of publication of application: **13.06.2001**
(21) Application number: 00127000.8
(22) Date of filing: 08.12.2000
(51) Int. Cl.: F16J 15/32

(54) **A low-friction seal assembly, in particular for a rolling-element bearing, and a manufacturing method therefor**

(30) Priority: 10.12.1999 IT TO991087
(71) Applicant: RFT S.p.A., 10121 Torino (IT)
(72) Inventor: Coscia, Flavio, 14100 Asti (IT)
(74) Representative: Eccetto, Mauro

(57) **Abstract**

A seal assembly (5) which includes an annular metal frame (7) and an elastomeric seal element which includes at least one lip (12) in vulcanized rubber with a sealing surface (13) coated with a thin layer (32) of PTFE of less than 0.2mm; the seal assembly is obtained by a method which includes the steps of vulcanizing the said elastomeric seal assembly with the said lip (12) on the said frame (7), spraying a polymerizable aqueous solution of PTFE onto the sealing surface (13) so as to apply a thin layer (32) of the said solution, and polymerizing the layer (32) whereby it becomes constituted of PTFE adhering mechanically to the sealing surface (13).

## Description

The present invention relates to a sliding seal assembly for insertion between two relatively rotatable members, in particular the rings of a rolling-element bearing, and to the manufacturing process thereof.

The insertion between two members in relative motion, in particular between two relatively rotatable members, of a seal assembly aimed at protecting the site formed between the said members, is known in the art. In wheel hubs in particular, sealed screens with sliding seals are used to protect the rolling-element bearing which supports the rotatable portion of the hub. In such an application, the seal assembly is subject to high speeds, considerable stress, high temperatures and highly aggressive external agents (water, mud, pollutants).

For this reason, seal assemblies constituted by one or more polytetrafluoroethylene (PTFE) lips have been proposed instead of the conventional sealed screens constituted by a metal frame carrying an elastomeric seal element with one or more sliding lips. The new assemblies, however, do not easily adhere to the frame and are therefore generally secured mechanically, by being clamped between two or more frame elements, coupled by plastic deformation. This makes the frames complicated, expensive and bulky and, in any case, provides a less than satisfactory seal. Another arrangement involves using normal sealed screens, of the type first described, which slide directly on the rotatable part (shaft) and thus require the part to be pre-lubricated, with grease or paraffin wax for example, thereby increasing assembly costs. In addition, this arrangement involves heavy wear on the seal assembly, making it necessary to check the lubrication frequently, while it also provides a very high frictional couple, which could increase fuel costs.

In order to avoid pre-lubrication and to reduce the frictional couple on the seal assembly, one solution in the art has been to apply a PTFE (Teflon®) insert, constituted by a strip 1.5-2 mm thick, to the slidable rubber lip, the insert being co-moulded with the elastomeric seal assembly and secured to the sealing lip during vulcanization. This manufacturing process is very complicated and expensive, however, since the PTFE insert must be placed in the mould and held in position while the elastomeric seal element is formed and vulcanized. The relative thickness of the PTFE insert further increases the cost of this arrangement.

The object of the present invention is to provide a seal assembly free of the disadvantages described and which, in particular, is both simple and economical to manufacture, is not too bulky and provides relatively high performance seal. A further object of the invention is to provide a method for manufacturing such a seal assembly.

This object is achieved according to the invention by providing a seal assembly for insertion between two relatively rotatable members, operable to cooperate slidably with one of the said members, including a metal frame which carries an elastomeric sealing element having at least one sliding lip with a sealing surface, characterised in that at least part of the said sealing surface is coated with a PTFE film which has been polymerised in situ so that it adheres mechanically and chemically to the elastomeric material of the sealing lip.

According to another aspect of the invention, a method is provided for the manufacture of a seal assembly for insertion between two relatively rotatable members and cooperation with one of the said members, characterised in that the method includes the steps of:
- forming and vulcanizing an elastomeric seal assembly with at least one sliding lip on a substantially rigid frame, the said lip to include a sealing surface operable to cooperate slidably with one of the said members;
- providing a polymerizable solution of PTFE precursor monomers and/or oligomers and/or low molecular weight polymers;
- spraying the said polymerizable solution on at least part of the said sealing surface so as to provide a thin layer of the said solution in situ; and
- polymerizing the said layer in situ so as to form a thin PTFE film which adheres mechanically to the elastomeric material of the said sealing lip.

In order better to understand the invention, a preferred embodiment thereof is now described purely by way of non-limitative example, with reference to the appended drawings, in which:
Figure 1 is a partially sectioned view of a seal assembly of the invention; and
Figure 2 is a diagram comparing the frictional couple of the seal assembly of Figure 1 with a seal assembly of identical structure but of a known type.

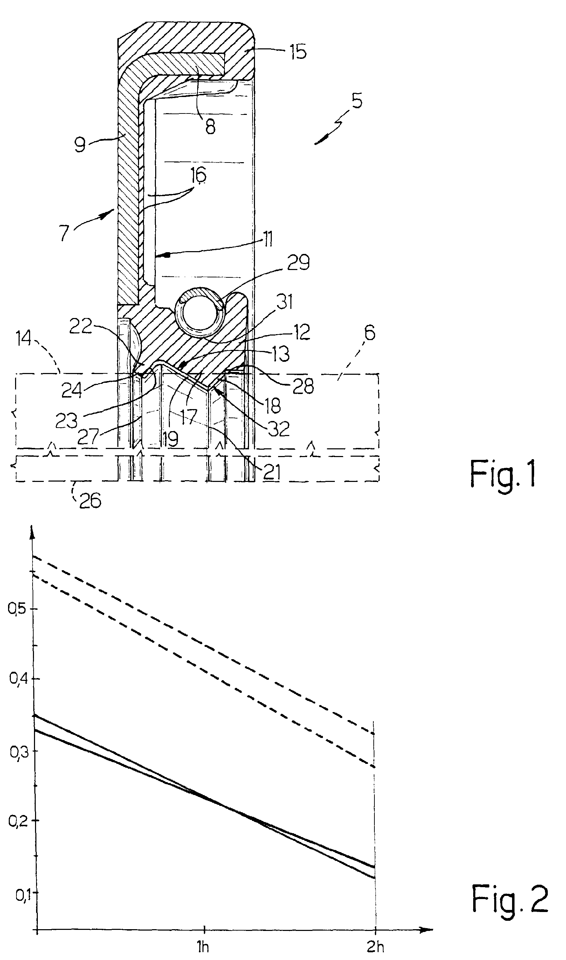

With reference to Figure 1, a seal assembly is generally indicated 5, for insertion between two known relatively rotatable members, only the rotatable member, defined by a shaft indicated by a broken line in Figure 1, being shown, for the sake of simplicity. In particular, the seal assembly 5 can be mounted on a wheel hub of a motor vehicle, which is rotatable relative to a support arranged to the right of the seal assembly 5 in the drawing and not shown in Figure 1 for the sake of simplicity.

The seal assembly 5 includes a substantially rigid annular frame 7, made of formed metal and shaped like an upturned L cross-section, having a cylindrical sleeve portion 8 and a flat flange portion 9. An elastomeric seal element 11 is secured to the annular frame 7 so as partially to cover it.

In particular, the element 11, which was formed directly on the frame 7, preferably by compression forming, and glued to the frame 7 during vulcanization, includes a radial sealing lip 12 which projects from the frame 7 towards the shaft 6, on the opposite side to the sleeve portion 8. The lip 12 has a sealing surface 13 for slidably engaging, in use, a cylindrical sealing surface 14 of the shaft 6.

The element 11 also includes a portion 15 which radially covers the outside of the sleeve portion 8, thereby forming a static seal with the respective seat of insertion of the seal assembly 5, and a portion 16 connecting the lip 12 to the portion 15, which adheres to the flange portion 9 of the frame 7.

In the embodiment illustrated by way of non-limitative example, the lip 12 includes a main sealing lip 17, having a triangular (V-shaped) radial section and defining the sealing surface 13 between two faces 18 and 19 and an annular edge 21 facing the shaft 6. The lip 12 also includes a dust-shield lip 22 which is substantially rectangular in cross-section and has two sides inclined to the axis 26 of the shaft 6. The lip 22 has two surfaces 23 and 24 defining a second sealing edge 27 facing the shaft 6. The width of the two surfaces 23 and 24 is determined so that the dust-shield lip 22 is relatively resiliently compliant outwardly of the shaft 6.

The sealing surface 13 of the lip 12 also includes a cylindrical portion 28, arranged on the side of the support of the shaft 6 (on the right in Figure 1) and, in addition to the two surfaces 18 and 19 of the main lip 17, the surface 23 of the dust-shield lip 22 faces the main lip 17.

Finally, the seal assembly 5 includes resilient means (a toroidal spring) mounted externally on the lip 12 in order to increase, in use, the sliding pressure of the latter on the cylindrical surface 14 of the shaft 6, housed in particular in a groove 31 in the lip 12 opposite the sealing surface 13.

In Figure 1, the lip 12 of the seal assembly 5 is shown in a not deformed position, in the absence of the shaft 6, with which the lip 12 contacts by interference.

According to the invention, at least part of the surface 13, the entire surface 13 in the embodiment illustrated, is coated with a thin PTFE film 32, to a thickness of only a few hundredths of a millimetre and in any case no more than around 0.2mm, formed in situ on the lip 12 in the following manner.

The seal assembly 5 as described is first assembled in a known manner, apart from the film 32, and the sealing element 11 is vulcanized. The film 32 is then formed in situ on the seal assembly thus produced, which is identical to prior art sliding seal assemblies, by first applying, in particular by spraying a thin layer of a polymerizable solution of PTFE precursors, monomers and/or olygomers and/or low molecular weight polymers for example, onto the sealing surface 13 (or onto the portion thereof on which the film 32 is required), to a thickness which is preferably less than 0.02mm, and then polymerizing the layer of solution in an oven or autoclave, for example, or even at ambient temperature. During polymerization, the layer of solution forms the film 32 which adheres mechanically and chemically to the rubber of the lip 12, coating the surface 13 and, above all, the sealing edge 21.

In particular, an aqueous solution of polymerizable materials is used to form the film 32, by spraying it onto the surface 13 with suitable nozzles. It is advantageous to use the solution sold by the Dow Corning Corporation under the trade name "MOLYKOTE D-96.

The steps of spraying and polymerization are preferably carried out so as to achieve a thin layer or film of PTFE, of a thickness of between 0.001 and 0.02mm. Polymerization may be carried out at a temperature of between 20°C and 50°C.

Thus Teflon-coated, the sealing lip 12 has a frictional couple of around half that of prior art sealing rings but, surprisingly, although the PTFE film is very thin, only a few microns, the sealing lip has a long life, wearing only very slowly. This is probably due to the fact that, as a result of this extreme thinness, in use the film 32 transfers part of its constituting PTFE to the shaft 6, thus forming a working counterface on the surface 14 for the sealing surface 13.

In particular, in a trial comparing a seal assembly of the type described with one that was identical but without the film 32, wear on the edge 21 was less in the first case (compared to the second) by more than 53%, while the frictional starting couple was 47% less and the working couple was more than 31% less.

Figure 2 shows a diagram of the frictional couple, expressed as N/m according to the operating time, comparing a Teflon-coated seal assembly according to the invention with an identical one made according to the prior art. The tests were conducted with a 64-mm diameter shaft, starting at ambient temperature and rotating at 3000 rpm for two hours.

The two unbroken lines on the diagram show the frictional couple of the Teflon-coated seal assembly 5 as found in two separate trials, while the two broken lines show the frictional couple in the two respective tests of a known sealing ring.

The following table shows the values of frictional couple measured in N/m in the aforesaid tests:

| Invention | | | Prior Art | |
|---|---|---|---|---|
| Test Number | Start | End of test | Start | End of Test |
| **1** | 0.35 | 0.12 | 0.56 | 0.28 |
| **2** | 0.33 | 0.13 | 0.59 | 0.31 |

In addition, the average wear on the sealing edge 21 of the lip 12 was 0.21mm, while that on the sealing edge of the known device was 0.42mm.

The above figures clearly demonstrate the advantages of the invention. Firstly, the Teflon coating process is simple. It is also very economical, partly owing to the tiny amount of PTFE used.

Naturally, the principle of the invention remaining unchanged, a variety of modifications and improvements can be made to the Teflon-coating process and to the seal assembly as described, without departing thereby from the scope of the invention. For example, the PTFE layer or film 32 could be applied by a different method to spraying. In addition, the Teflon coating can be applied to any seal assembly and the shape of the main lip 17 and/or of the dust-shield lip 22 could be modified.

## Claims

1. A seal assembly (5) for insertion between two relatively rotatable members for slidable cooperation with one of the said members, said seal assembly comprising: a metal frame (7) carrying an elastomeric sealing element (11) which includes at least one sliding lip (12) having a sealing surface (13), characterised in that at least part of the said sealing surface (13) is coated with a PTFE film (32), polymerized in situ so that it adheres mechanically and chemically to the elastomeric material of the sealing lip (12).

2. A seal assembly according to Claim 1, characterised in that the said PTFE film (32) has a thickness between 0.001 and 0.02mm.

3. A seal assembly according to Claim 2, characterised in that the said metal frame (7) has an L-shaped cross-section and is at least partly covered by the said elastomeric element (11).

4. A seal assembly according to Claim 3, characterised in that the said sealing lip (12) includes a main triangular-section lip (17) having an edge (21) facing one of the said relatively rotatable members (6); and a dust-shield lip (22) having a rectangular cross-section with sides inclined to the axis of relative rotation (26) of the said members, the said dust-shield lip (22) being relatively resiliently compliant.

5. A seal assembly according to Claim 4, characterised in that the said PTFE film (32) covers two surfaces (18, 19) of the said main lip (17) adjacent the said edge (21) and at least one surface (23) of the said dust-shield lip (22) facing the said main lip (17).

6. A method for producing a seal assembly (5) for insertion between two relatively rotatable members for cooperating slidably with one (6) of the said members, characterised by the steps of:
- forming and vulcanizing an elastomeric seal element (11) which includes at least one sliding lip (12) on a substantially rigid frame (7), the said lip (12) to include a sealing surface (13) operable to cooperate slidably with one of the said members;
- preparing a polymerizable solution of PTFE-precursor monomers and/or oligomers and/or low molecular weight;
- applying the said polymerizable solution to at least part of the said sealing surface (13) so as to form a thin layer of the said solution in situ; and
- polymerizing the said layer in situ so as to form a thin PTFE film (32) which adheres mechanically and chemically to the elastomeric material of the said sealing lip.

7. A method according to Claim 6, characterised in that an aqueous solution of the said PTFE precursors is used.

8. A method according to Claim 7, characterised in that the said solution is applied by spraying to form a layer of less than 0.02mm.

9. A method according to Claim 8, characterised in that at the end of the step during which the solution is polymerized, a PTFE film is formed of a thickness of between 0.0001 and 0.02mm.

10. A method according to any one of Claims 6 to 9, characterised in that the said polymerization step is carried out at a temperature of between 20°C and 50°C.
